# EUROPEAN PATENT SPECIFICATION

(11) **EP 1 029 305 B1**
(45) Date of publication and mention of the grant of the patent: **02.07.2003**
(21) Application number: 98953001.9
(22) Date of filing: 11.11.1998
(51) Int. Cl.: G06K 19/077

(54) **METHOD AND APPARATUS FOR THE AUTOMATIC PRODUCTION OF PERSONALIZED CARDS AND POUCHES**
VORRICHTUNG UND VERFAHREN ZUR AUTOMATISIERTEN HERSTELLUNG VON PERSONENSPEZIFISCHEN KARTEN UND TASCHEN
PROCEDE ET APPAREIL DE FABRICATION DE CARTES ET D'ETUIS PERSONNALISES

(30) Priority: 12.11.1997 IL 12218597; 09.11.1998 IL 12696498
(43) Date of publication of application: 23.08.2000
(73) Proprietor: SUPERCOM LTD., 43665 Raanana (IL)
(72) Inventor: HASSAN, Jackob, 45304 Magdieal Hod Hasharon (IL); ROZEN, Eli, 46768 Herzlya Bet (IL); LANDMAN, Avi, 26306 Kiriat Haim (IL)
(74) Representative: Prato, Roberto
(86) International application number: IL9800549
(87) International publication number: WO99024934

(56) References cited:
- EP-A- 0 638 873
- WO-A-92/21105
- GB-A- 2 279 612

## Description

### Field of the Invention

This invention relates to a method for continuously and automatically producing personalized, contactless or regular, smart cards, such as identity cards, passes and the like, bearing printed graphic and textual matter, generally including identifying photographs. It further relates to the smart cards, to a new article of manufacture, known as a "pouch", and to intermediate products produced by said method.

### Background of the Invention

Contactless smart cards presently consist of a body of PVC, generally comprising three superimposed layers, a microchip and an antenna, which constitute the electronic part of the smart card, being imbedded in the intermediate layer. Such a smart card can be made by starting from a base layer of PVC, inserting into it, by applying pressure and heat, the electronic circuit, comprising microchip and the antenna, and then connecting to said base layer two layers of PVC. The smart card is "personalized" - viz. its owner is identified by means of any relevant information - after the card is completed, usually by embossing in it "personalizing" or identifying matter, viz. the matter that identifies the owner, and other matter that refers to one owner or to a limited number of owners, such as the period of validity of the card.

Such smart cards, however, have the essential defect of a relatively short life - three, to at most, five years. A substantially longer life, e.g., more than ten years, would be highly desirable, but could not be obtained with the types of materials presently employed for making contactless smart cards. The choice of said materials, however, is imposed by the process for making them, that is known in the art.

Further, no process is known in the art for making personalized smart cards in a continuous, automatic way, with the corresponding increase in productivity and reduction in costs; nor does the prior art disclose apparatus and machines for carrying a process into practice.

GB -A-2 279 612, against which the claims are delimited, discloses a smart card which comprises a printed circuit sandwiched between outer protective layers with intervening layers of reinforcing material. During fabrication an integrated circuit component on the card deforms a reinforcing material layer and embeds itself in a protective layer which is softened during the manufacturing process.

WO 92/21105 discloses a card which comprises a multilayer card body. Microchips and an aerial are enclosed between two internal layers of the card body, one of them consisting of a preshaped receiving plate with recesses and the second of a cover.

It is therefore a purpose of this invention to provide a process by which personalized smart cards, contactless or regular, can be produced continuously and automatically.

It is another purpose to provide a process by which can be produced a new article of manufacture a "pouch" - from which smart cards can be made. Preferably, said pouch should carry all or part of the information that is required in the finished card, except that which personalizes the card, viz. which carries the identification of the owner and,
optionally, other information pertaining to him and other indications which may vary from card to card, e.g., the date on which it elapses.

It is a further purpose to provide a smart card which has a substantially longer life than the existing ones, ten years or more.

It is a still further purpose to provide such a smart card wherein the personalizing matter and any preprinted matter is protected against damage or interference of any kind.

It is a still further purpose to provide a contactless or regular smart card which satisfies all the requirements and meets all the standards of the market.

It is a still further purpose to provide certain intermediate products, hereinafter described, which can be separately made and used as input in the process of the invention.

It is a still further purpose to provide apparatus for carrying out the method of this invention.

It is a still further purpose to provide an integrated machine for carrying out the method of this invention

Other purposes and advantages of the invention will appear as the description proceeds.

In this application, the term "substrate" or "print substrate" means any backing on the which printing can be effected, regardless of its form and composition. The terms "picture" or "graphic matter" synonymously indicate any kind of printable or printed subject matter, and therefore comprise, among other things, pictures representing persons or objects, portraits, photographs, letters, words, signs and any figures or images that may be carried by a substrate.

The invention as defined in the claims provides a solution to these problems.

Graphic matter can be applied to a print substrate - layer or sheet - by direct printing or by transfer, and the term "applying" is to be construed as including both possibilities, and generally speaking, any method by which a substrate may be caused to carry graphic matter. If any layer or sheet carrying print is laminated to another layer or sheet, it is preferably juxtaposed to this latter in such a way that the face of the substrate carrying the print is adjacent to said layer or sheet, whereby, after lamination the print is enclosed between the two layers or sheets.

The steps of the method need not all be performed in the order in which they have been listed above. In particular, the method chosen for applying graphic matter to a substrate may determine the moment in which it is applied, as will become apparent as the description proceeds. Further, it is not necessary that all the steps of the process be carried out in the same apparatus and/or in the same manufacturing plant. For instance, personalizing graphic matter can be applied to plastic sheets or reels by a printer, particularly a laser printer, and then the printed sheets or reels can be used as intermediate layers and/or cover sheets and fed to an apparatus for making the smart cards or pouches. Still, the application of personalizing graphic matter is a part of the process of this invention, and it does not matter that said process is carried out partly in an apparatus and/or plant and partly in another, and that the product of certain process steps becomes the input to further process steps.

If the method is applied to make smart cards directly, the cover sheets are laminated to the core over their entire surfaces, and the said individual segments are the finished smart cards.

If the method is applied to make the pouches, hereinafter described, from which the smart cards can be made, the cover sheets are laminated to the core only along one edge thereof, and the said individual segments are the pouches.

The words "layers", "sheets" or "leaves" are used herein as synonyms, and though the terms "intermediate layers" and "cover sheets" or "leaves" will mostly be used, for the sake of a clearer description, this does not imply a difference between the meanings to be attributed herein to those words.

Personalizing matter, and graphic matter in general, can be printed on, or transferred to, at least one of the intermediate layers or on at least one of the cover sheets, or on both. By "personalizing matter" is obviously understood graphic matter that identifies a smart card owner or a specific group of smart card owners. The corresponding printings or transfers are also steps of the process of the invention.

Preferably said foundation layer, said composite base layer sheet, said intermediate layers, said core, said cover sheets and said composite sheet are continuous or continuously fed, or, in other words, the entire process is a continuous succession of operations, and the components that are fed into it (feed components) and the intermediate structures generated by it are continuous structures. The feed components, when continuous, are preferably, though not necessarily, provided in the form of reels, mounted on rotatable supports, from which they can be unwound. They may be printed, before being wound onto the supports and the print will be carried by the inside surface of the reels. The feed components, however, can be provided and fed as individual sheets, having a size corresponding to a number, even a small number, of cards. Means for feeding sheets are known to persons skilled in the art and need not be described.

In a variation of said process, the base layer may be provided as such in a previous manufacturing stage, said provision taking the place of steps 1 to 3 hereinbefore listed, and form a reel that becomes a feed component or input to the process. However, as has been said, the overall process will remain the same as herein defined, although it is separated into two, or even more than two, stages, which may even be carried in different manufacturing plants. Therefore the base layer may be produced and marketed as an article of manufacture and is, in itself, a part of this invention; and the same is true of the core. When graphic matter is printed on the intermediate layers, once these have been laminated to the base layer the core carries the graphic matter.

The plastic material, of which the intermediate layers are made, is preferably, but not necessarily, a thermo-mechanically sensitive material or print substrate, such as Teslin. Teslin is a product of PPG industries, Inc., Pittsburgh Pa. Teslin™ is described as a single layer, highly filed, microporous plastic film, based on high density polyethylene (HDPE) and containing about 60% by weight of silica, available in gauges ranging from 7 Mil up to 18 Mil. Its properties have been described by the manufacturer and are known to persons skilled in the art. Other suitable materials are the polyesters and polyethylene. When reference is made in the claims to high density polyethylene, it should be understood that Teslin™ is included therein.

The thermo-mechanically sensitive materials herein particularly referred to are synthetic printing substrates, which, when printed upon and set in conventional laser printers, become severely or significantly damaged, often to such an extent that they cannot be used at all. If an attempt is made to render the setting conditions of laser printers less severe, in order not to damage the plastic card backing, then the setting is insufficient, the print is not stable, and once again the card is not satisfactorily usable.

The foundation layer is made of plastic matter preferably chosen from among polyester, Teslin and polyethylene, polyester, e.g., Mylar™ produced by DuPont, being preferred. The filling applied to the foundation layer is preferably of the same material as said layer.

The plastic material of which the intermediate sheets are made is preferably Teslin, but optionally may be the same as that of the foundation layer, or at least be chosen from the group of materials suitable for this latter.

Preferably, the foundation layer has a thickness of 0.1 to 0.7 µm, the base layer has a thickness comprised between 150 and 900 µm, and the intermediate layers have a thickness of 150 to 500 µm; the cover leaves have a thickness of 50 to 250 µm and the overall thickness of the core and said leaves, when laminated together, is about from 0.760 to 1.5 mm.

The dimensions of the component layers of the smart card, set forth hereinbefore, apply to the pouch as well, as it is evident that the layers that make up the pouch make up the card as well, and *vice versa*. The changes in thickness that may occur in the laminating steps are not taken into account in defining said dimensions.

The pouch, as well as the card that can be made from it, is usually rectangular, and in that case the word "side", as used hereinbefore, means a side - one of the longer or one of the shorter sides - of the rectangular shape. However, this must not be construed as a limitation, since the pouch and the card could have a geometric shape different from that of a rectangle, and in that case the word "side" is to be construed as meaning a straight or curved segment of the pouch periphery. The only limitation is that such a segment should not be so extensive as to prevent the degree of access to the rear faces (as hereinafter defined) of the cover leaves, or of the faces of the core, that is necessary to carry out the transformation of the pouch to a card in the way described hereinafter.

The finished card is "personalized" and provided with all other required information, if any. The face of the card from which the personalizing information is visible, will be called the "top face" and the other the "bottom face". Correspondingly, the core will be said to have a top and a bottom face, respectively underlying the top or bottom face of the card. Additionally, non-personalizing information may be preprinted on any face of the core, and in general on component layer or sheet of the card, by conventional means, and will not be considered in defining and describing this invention. The invention also includes and relates to cards wherein the personalizing matter is visible by looking at either face of the card, or part of it is visible by looking at one face and part by looking at the other face. In this case, it is obviously indifferent which face is considered the top or the bottom one. One of the intermediate layers forms the top face of the core, and will be hereinafter called the "top intermediate layer". The opposite intermediate layer that forms the bottom face of the core will be called the "bottom intermediate layer".

The cover sheet or leaf that forms the top face of the card (hereinafter, "the top cover leaf") is transparent. The cover leaf that forms the bottom face of the card (hereinafter, "the bottom cover leaf') is preferably, but not necessarily, transparent. Both cover leaves are preferably made of a material chosen from among Teslin and polyester, the polyester being, e.g., Mylar™, and are laminated to the core.

As has been said, the base layer has a thickness which is dictated by the dimensions of the electronic components and is generally substantially equal to the thickness of said components. Typically, said thickness is comprised between 150 and 900 µm. The intermediate layers and the cover leaves have a thickness that is determined by the final, overall thickness of the smart card. A typical thickness of this latter is 0.760 to 1.5 mm and, typically, the intermediate layers may have a thickness of 400 to 500 µm, and the cover leaves may have a thickness of 30 to 250 µm. The electronic circuits of the smart card are the conventional ones used in contactless smart cards, and include conventional components and connections, so that no description thereof is required.

The pouch constitutes *per se* an article of manufacture, which can be sold by its manufacturer to the distributors of contactless smart cards or to suppliers of those distributors, who will personalize it and transform it into the final card. This is done by: a) applying printed personalizing matter (and other auxiliary information, if any) to the rear face of the top cover leaf, or of both cover leaves (by "rear face" is meant the face adjacent and connected to the core), or to one or both faces of the core; b) laminating the core and the cover leaves together by the application of pressure and heat, and, optionally, adhesive. By "laminating" is understood herein the operation of joining two or more thin, juxtaposed, layers together over all or part of their surfaces, regardless of the process and apparatus means used for doing it.

In a preferred embodiment of the invention, the base layer comprises a very thin film - the foundation layer - of polyester, e.g., having a thickness of 0.1 to 0.7µm, onto which the electronic components are placed and adhesively connected, and a filling which fills all the spaces between the electronic components, over the entire surface of the base layer, to a height corresponding to the thickness of the said components, whereby to complete the base layer, which becomes a flat, composite sheet having the thickness of the electronic components. Said filling may be of the same material as the foundation, or of a different material.

When a sheet that is laminated carries printed graphic matter, the statement that it is laminated over it entire surface, whenever used herein, should be construed to include lamination over the part of the surface that does not carry such matter.

A process by which printed matter is applied to the rear face of the front leaf of a card blank comprising a front and a back leaf is described in application PCT/US 96/05084 (publication number) WO 96/32256). By essentially the same process, personalizing matter, and optionally other matter, can be printed on rear faces of one or of both of the cover leaves, or on one or both faces of the core.

Conventional laser printing comprises a setting stage for rendering the print or graphic matter, viz. the coloring matters or toners which define it, stage in which heat and pressure are applied to the print substrates onto which the toners have been applied. Substrates made of thermo-mechanically sensitive materials might be damaged in such a stage. A simple test, described in copending PCT Patent Application PCT/US 95/13860, published as WO 96/13392, permits to determine whether a given substrate is thermo-mechanically sensitive, in the sense in which this expression is used in the present application. It suffices to pass the substrate between two rollers, heated to minimum. 120°C and pressed against one another with a pressure of minimum 150 Kg. If this operation significantly affects the substrate, as to its physical properties or appearance or other properties relevant to its function as a print substrate, it should be classified as "thermo-mechanically sensitive".

To avoid damage to said materials, a laser printing process has been developed and forms the subject matter of said copending PCT Patent Application, which process comprises only partially setting the toners by radiant heating and thereafter bonding the substrate on one or both faces by lamination to a coating film or films, whereby the toners are completely set and protected. In carrying out this invention, the personalizing matter is preferably printed by laser printing. When it is printed on continuous sheets, particularly cover sheets of a thermo-mechanically sensitive material, e.g. Teslin, the laser printed matter is also partially set, preferably by radiant heating, and the partially set matter is sufficiently stable to permit winding and rewinding the continuous sheets, and generally handling them, as required by the process of this invention. Color laser printers which print on individual sheets or on continuous reels are available on the market, e.g. the Xikon printer, and only need to be modified to carry out the partial setting. Alternatively, it would be possible to laser print the personalizing matter on separate pieces of print substrate and apply them to a continuous sheet by means of an adhesive and/or of cold lamination, or to reverse print separate pieces and laminate them to a continuous sheet.

Said segments are the finished smart cards. However, an apparatus as defined above can be used for making pouches, and if so, said segments are the pouches.

### Brief Description of the Drawings

In the drawings:
- Fig. 1 is a schematic perspective view from above of a personalized contactless smart card according to an embodiment of the invention;
- Fig. 2 is a cross-section of the smart card of Fig. 1, taken on plane II-II of Fig. 1, parallel to the longer side of the card;
- Fig. 3 is a schematic perspective view from the bottom of the smart card of Fig. 1;
- Figs. 4 is a schematic illustration of the process for making personalized, contactless smart cards, or pouches, according to an embodiment of the invention;
- Figs. 5 to 7 and 7A illustrate the steps of said process;
- Figs. 8 to 10 illustrate in schematic cross-section the products (base layer, core and smart card) generated in various stages of the process according to an embodiment of the invention;
- Fig. 11 is a schematic cross-section of a pouch according to an embodiment of the invention (from which the smart card of Figs. 1 to 3 can be produced) taken on a plane parallel to the longer side of the card; and
- Figs. 12 to 15 illustrate a process for printing the personalizing matter, according to an embodiment of the invention.

### Detailed Description of Preferred Embodiments

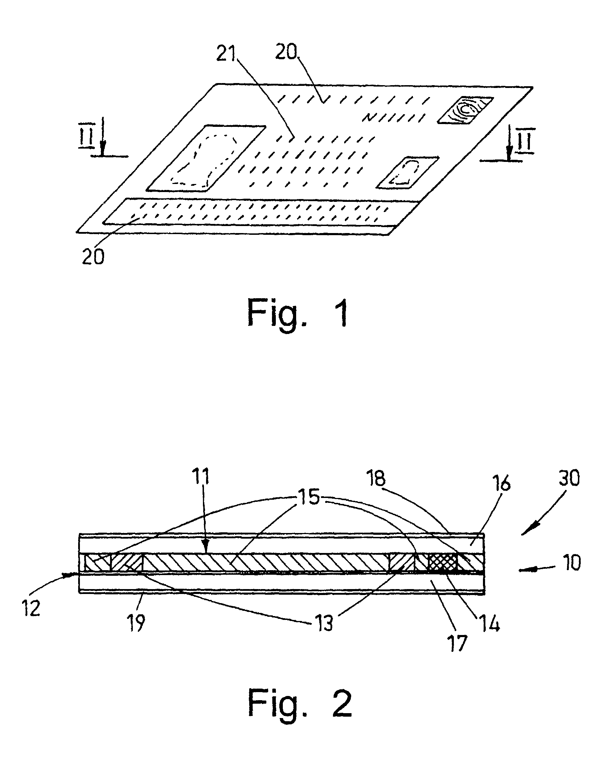

Figs. 1 to 3 illustrate a finished contactless smart card according to an embodiment of the invention. 11 generally indicates the base layer, which comprises, in this embodiment, a foundation 12 of polyester, e.g., Mylar™, an antenna 13, a microchip 14, and a filling 15, preferably but not necessarily of the same material as the foundation layer. 16 is the top intermediate layer. 17 is the bottom intermediate layer. The intermediate layers are preferably made of Teslin. Layers 11, 16 and 17, together, form the core, generally indicated at 10. 18 and 19 are the top and bottom cover leaves. The thickness of the various layers is exaggerated in these and other figures for purposes of illustration.

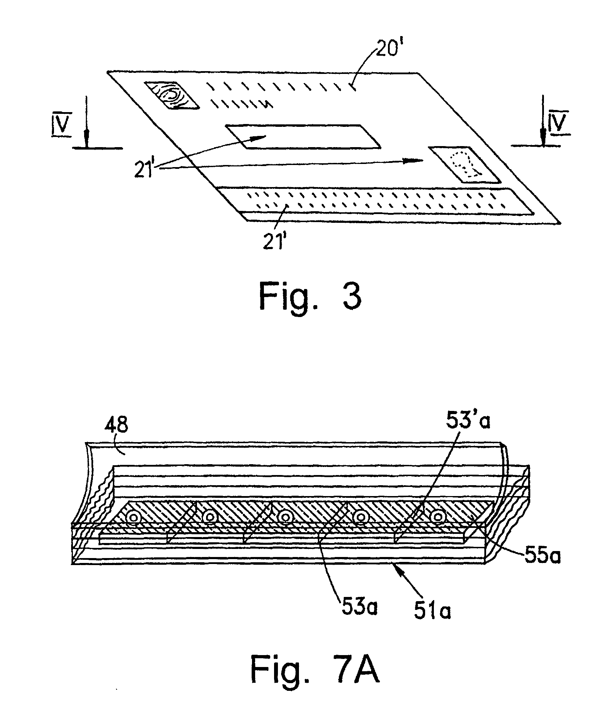

In Fig. 1, 20 designates the preprinted matter on the top face of the core (shown only schematically) and 21 is the personalizing printed matter (also shown only schematically). All of such printed matter is visible through top cover leaf 18, which is transparent. Fig. 3 shows non-personalizing, preprinted matter 20' as well as personalizing matter 21', carried by the bottom face of the core, and visible through the unprinted, transparent, bottom cover leaf. If no printed is to be visible through the rear face of the bottom cover leaf, this latter may be opaque.

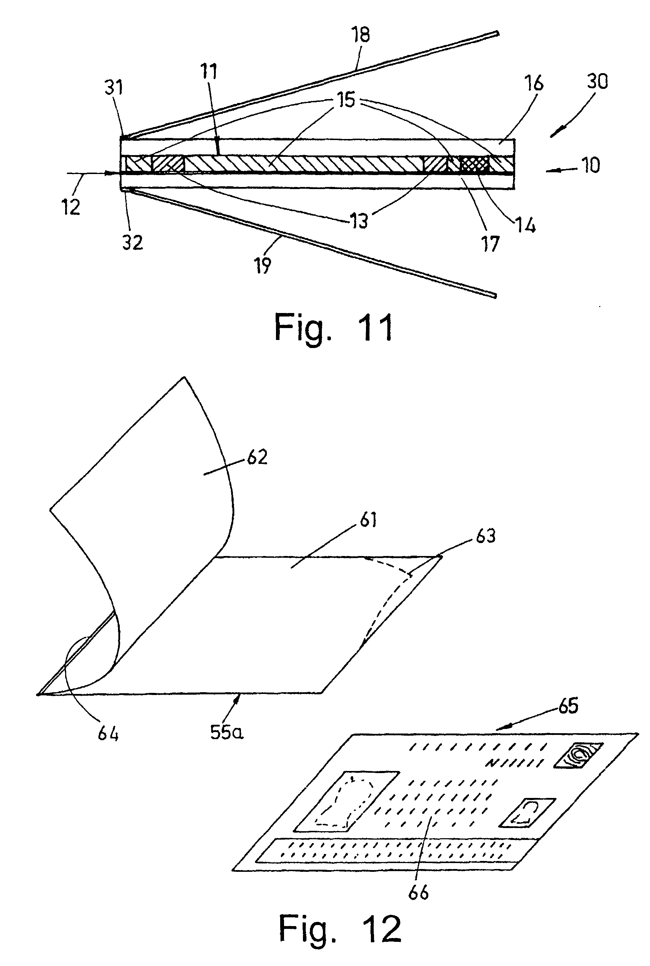

Fig. 11 schematically illustrates a pouch, according to an embodiment of the invention, in cross-section on a plane corresponding to the plane II-II of the cross-section (Fig. 2) of the finished card. The components of the pouch, generally designated by 30, are indicated by the same numerals which have been used to designate them in the finished card. The cover leaves 18 and 19 are shown as separate from core 10, which is a laminate constituted by the base layer 11 and the intermediate layers 16 and 17. The core 10 and the intermediate layers are connected together only along edge 31-32. In this embodiment, the pouch is rectangular and edge 31-32 is one of its shorter edges, but could be one of its longer edges.

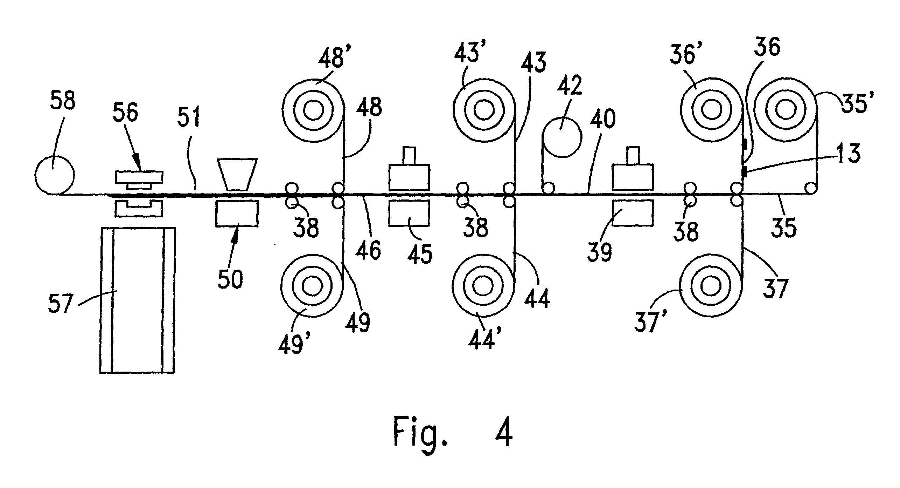

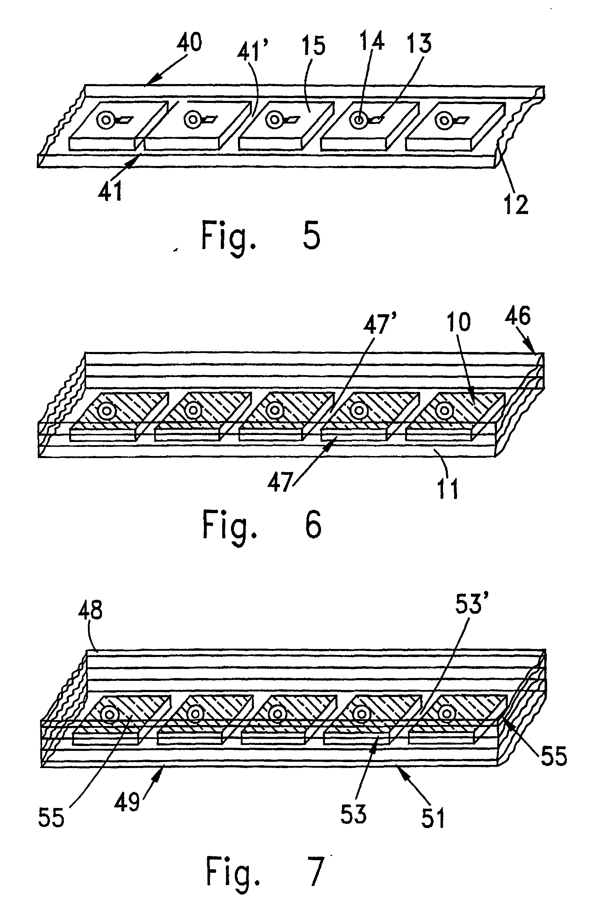

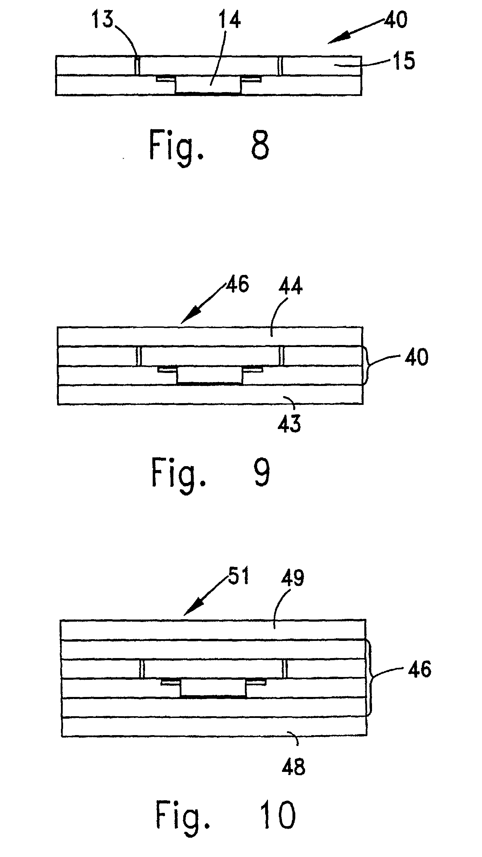

A preferred, though not exclusive, process for making the smart card according to the invention, is generally illustrated in Fig. 4, intermediate results of it being shown in Figs. 5 to 7 and 7A, but it should be understood that any smart card as structurally defined herein is included in the scope of the invention, even if produced by a different process.

In Fig. 4, numeral 35' indicates a reel e. g. of polyester material, from which strip 35 that forms the foundation 12 is unwound. Alternative ways of producing and feeding the foundation layer as well as the other layers involved in the process, will be mentioned hereinafter. The upper face of strip 35 carries thereon an adhesive. A strip 36, fed from a reel 36', is a thin layer which carries the electronic circuits, each including an antenna 13 and a microchip 14 and the connections therebetween, at distances from one another corresponding to the dimensions of the desired core. Said electronic circuits are transferred to foundation layer 12 and become attached to it through said adhesive. The strip 36, from which the circuits have been removed, is collected by a trash collector 42.

Successively, the filling 15 is applied to it. One convenient way of applying said filling is to feed, from another reel 37', schematically indicated in the figure but actually located in any convenient position, another strip 37 of a desired material, preferably the same material of which the foundation layer is made.

Strips 35, 36 and 37 are advanced in the appropriate, registered positioned relationship. Numeral 38 schematically designates guide rollers applied to guide the strips throughout their processing.

The registered strips 35, 36 and 37 pass through a laminator 39 which applies pressure and heat. If the strips move continuously, the laminator is of the roller type. If they move by increments, the laminator may be of the pressure plate type. The lamination causes the material of strip 37 to fill the spaces between the electronic components which have been applied to the foundation and to join firmly together the filling, the electronic circuits and the foundation, to produce what may be called a base layer or strip 40.

Fig. 5 shows, in schematic perspective, a segment of the base layer strip 40, which comprises the foundation layer 12 (the thickness of which is exaggerated in the drawing), the electronic circuits 13-14, attached to it, and the filling 15. Generally, the edges of the foundation strip 12 are left blank, as indicated at 41. For illustration purposes, the filling is shown as separated by narrow transverse strips 41' into elements having the length of the finished cards, though such a separation generally does not exist at this stage. Fig. 8 is a schematic cross-section of such an element.

In an alternative embodiment of the invention, the base layer strip may be formed separately, and preferably wound in a reel, and becomes an input to the remaining stages of the process.

Base layer 40 is then laminated to the two intermediate layers, at least one of which has previously been printed, as described hereinbefore, with personalizing, and - if desired - non-personalizing - graphic matter. Said intermediate layers, in the form of strips 43 and 44, are unwound from reels 43' and 44' respectively. Then they are laminated to base layer 40 by laminator 45, similar to laminator 39 (though it may laminate the intermediate layers only on that part of their surface that does not carry graphic matter), to produce what may be called core strip 46 (Fig. 6). constituted by a succession of cores 10, joined by blank edges 47, which are constituted by blank edges 41 and by superimposed edges of strips 43 and 44, having the same dimensions respectively as edges 41. In this figure too, separations between individual cores by transverse strips 47' are shown for purposes of illustration, though they generally do not exist at this stage. Fig. 6 is a schematic cross-section of an individual core.

A top cover sheet or leaf strip 48 and a bottom cover sheet or leaf strip 49 are unwound from reels 48' and 49' respectively. They are laminated to core strip 46 on their entire surfaces by laminator 50, which may be similar to laminator 39. Top cover leaf strip 48 at least is transparent. The resulting card strip 51 (see Fig. 7) is constituted by a succession of cards 55 and blank edges 53. In this figure too, separations between individual cards by transverse strips 53' are shown for purposes of illustration, though generally they do not exist at this stage. Fig. 7 is a schematic cross-section of an individual card.

All laminations are carried out by the application of pressure and heat and, optionally, by the use of adhesive in conjunction with pressure or pressure and heat.

In an alternative embodiment of the invention, wherein pouches are the produced article, to be subsequently personalized to finished smart cards, a top cover leaf strip 48 and a bottom cover leaf strip 49 are laminated to core strip 46 along only one edge 31-32 thereof (see Fig. 11), by laminator 50, which in this case is an edge laminator and has the appropriate configuration for carrying out this function, viz. has a sufficiently narrow operative surface, whether it is of the roller or of the plate type. Top cover leaf strip 48 at least is transparent. The resulting strip 51a, shown in Fig. 7A, is similar to a card strip 51, may be called "pouch strip", and is constituted by a succession of pouches 55a, joined by blank edges 53a having the same dimensions respectively as edges 41, and having transverse edges 53'a. The core and the cover leaves are joined only at one edge - the forward edge as seen in Fig. 7A - as is emphasized in said figure by showing top cover sheet 48 as curled up at the unjoined edge. In all other respects, this embodiment does not differ from the embodiment for directly making smart cards, previously described.

All laminations are carried out by the application of pressure and heat and, optionally, by the use of adhesive in conjunction with pressure or pressure and heat.

In Fig. 4, the several strips are assumed to be fed from corresponding reels and to be considered continuous. However, the strips could be provided in different forms and fed in different ways. E.g., segmental sheets, each having a length corresponding only to a relatively small number of pouches, could be fed by means easily provided by skilled persons and subjected to the operations described with reference to Fig. 4. Such segmental strips could be provided, printed when needed and fed to the process and processed in straight configuration. It would be possible, although in general not desirable, to provide, feed and process unit elements, viz. layer elements each having dimensions corresponding to one card. Further, it would be possible to form the strips, e.g. by extrusion or calendering, and feed them directly to the process steps described with reference to Fig. 4. All such possible variants, and others that could be conceived by skilled persons, are within the scope of the invention. The schematic illustration of reels in Fig. 4 should be construed, therefore, as schematically representing any devices for feeding either continuous or segmental layers or sheets.

Individual cards 55, or pouches 55a, are then cut or punched out of card strip 51 or pouch strip 51a respectively, by means of cutter 56, of any suitable type and size, and are collected in collector 57. The part of strip 51 or 51a that remains after the cutting, and includes the blank edges 53 or 53a, and, possibly, narrow transversal strips separating successive cards or pouches, is collected by a trash collector 58. The traction required to advance the various strips along the process line described is provided by said collector 58 and, if required, by traction rollers, which may be a number of the guide rollers 38 or may be additional rollers, not shown.

It is clear that the process can be, and desirably will be, rendered automatic by providing a control, e.g. an electronic control, that activates the motors, which produce the various motions that are part of the process, in the appropriate synchronism. Such a control, being a matter of design, within the ability of persons skilled in the art, need not be described.

In an embodiment of the invention, personalizing matter or information can be applied to the rear face of the top cover leaf of the pouch essentially by a process described in application WO 96/32256, hereinbefore mentioned. Said application describes, among other things, a method for making cards wherein the card may comprise an inner, opaque layer, and two cover leaves, one of which at least is transparent. Said method starts from the provision of a card blank - in this application, the method starts from the pouch described hereinbefore - one or more of the components of which may, and generally will, carry preprinted matter. After the provision of said pouch, and after a printer, which is preferably a laser printer, is programmed with a set of digital signals defining the desired identifying matter - herein called "personalizing matter" or "personalizing information"- the following operations are carried out:
a) providing a temporary substrate;
b) depositing on said temporary substrate colors (toners) whereby to print the desired identifying (personalizing) matter, preferably as in the conventional laser printing method;
c) provisionally setting said printed identifying (personalizing) matter, preferably by the application of radiant heat without application of pressure;
d) juxtaposing said temporary substrate with the surface that has been chosen to carry the identifying (personalizing) matter, which may be the rear face of a cover leaf or a face of the core of the pouch;
e) transferring said identifying (personalizing) matter from the said temporary substrate to said chosen surface, whereby said identifying (personalizing) matter is transferred to it and is visible through at least one transparent cover;
f) removing said temporary substrate; and
g) subjecting the pouch to lamination whereby to produce the finished smart card, the identifying (personalizing) printed matter being visible through at least a transparent cover leaf, viz. the top cover leaf thereof or both cover leaves.

Desirably, the temporary substrate has a surface that is less adhesive to the coloring matters used than the surface chosen to carry the personalizing matter.

If the personalizing matter is to be applied in whole or in part to the rear face of both cover leaves, the above operations will have to be carried out twice, once for each leaf. If the personalizing matter is to be applied in whole or in part to a face or both faces of the core, it may be printed on the intermediate layers directly, in the same way as it can be printed on the cover sheets.

An embodiment of said process, wherein the surface chosen to carry the personalizing matter is the rear surface of the top cover leaf, is illustrated by Figs. 12 to 15. In Fig. 12, a pouch 55a is illustrated as comprising a core 61, which comprises the base layer and the two intermediate layers hereinbefore described. Pouch 55a further comprises top cover leaf 62 and bottom cover leaf 63. In pouch 55a, the core 61 and the cover leaves are connected along one edge, as shown at 64. Fig. 12 also shows a temporary substrate 65, carrying the printed and provisionally set identifying matter generally indicated at 66.

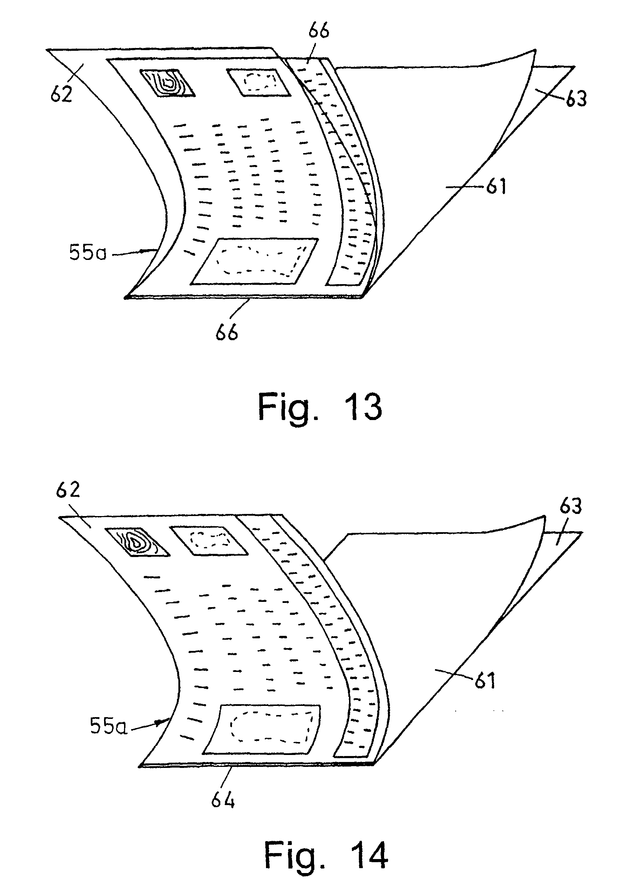

Fig. 13 shows pouch 55a after the temporary substrate 66 has been inserted into the pouch, adjacent to its top leaf.

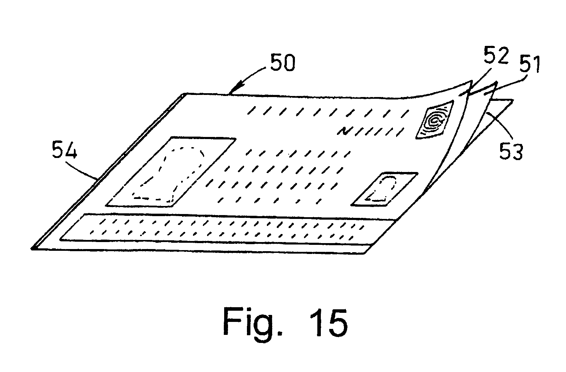

In Fig. 14, the pouch is shown as it is after the printed matter of the temporary substrate has been transferred to the rear face of the top cover leaf 62 and the temporary substrate has been removed. Fig. 15 shows the card resulting from the final lamination of the cover sheets to the core, although in this figure, as well as in Figs. 12 to 14, some components of the pouch are shown as bent and separate for purposes of illustration.

Further details as to said process are provided by said PCT application WO 96/32256.

If personalizing information is to be carried by the bottom cover leaf as well, it can be directly printed on it by laser printing or applied to it in the same manner as described above with respect to the front cover leaf.

If the core has been formed by lamination of unprinted intermediate sheets to the base layer, and personalizing information is to be carried by the top or bottom face thereof, steps a) to c) of the process described for applying such information to the front cover leaf are repeated, but in step d) the temporary substrate is juxtaposed to the face of the core that has to carry the information, with its face carrying the personalizing matter in contact with said core face; and in step e) personalizing matter is transferred from the temporary substrate to by the top or bottom face of the core and is visible through said the adjacent cover leaf from the top face thereof; whereafter the temporary substrate is removed.

As said hereinbefore, the scope of this application is not limited to said preferred processes, but any smart card or pouch as structurally defined herein is comprised within said scope. In particular, if the personalizing matter is printed on an intermediate layer, before or after laminating it into the core, it will be already present in the pouch and it will be sufficient to subject the pouch to lamination on all its surface to produce the card, wherein the printed matter will be visible through the near cover leaf. In any case, whether the card according to an embodiment of the invention is made by the described preferred processes or by any alternative process, any printed matter carried by it, including the identifying information, is protected by the cover leaves and is tamper-proof. Any preprinting on any component of the pouch and card, particularly on the intermediate sheets, will not affect the process herein described and the structure of the card and pouch according to embodiments of the invention.

## Claims

1. Method for the production of personalized, smart cards or smart card pouches, which comprises
providing a foundation layer (12),
applying to said layer the electronic components (13,14) that are desired in the smart card, providing two intermediate layers (16,17) and two cover sheets (18,19) of plastic matter and connecting said layers and sheets together to form a composite strip (51), and detaching individual segments from said composite strip **characterized by**:
I - forming a core (10) by applying a filling (15) to the foundation layer (12) between said electronic components (13,14), whereby to create a base layer (11) having a thickness corresponding to the dimensions of the electronic components; applying the desired personalizing graphic matter (21) either to said intermediate layers or to said cover sheets; and juxtaposing said intermediate layers (16,17) to said base layer (11) and connecting them to it by lamination over the entire juxtaposed surfaces of said intermediate layers and said base layer;
II - juxtaposing said cover sheets to said core;
III - subsequently laminating said cover sheets to said core to produce a composite strip (51,51a); and
and in that at least one of said cover sheets (18,19) is transparent.

2. Method according to claim 1, carried out continuously.

3. Method according to claim 1, carried out automatically.

4. Method according to claim 1, wherein the cover sheets (18,19) are laminated to said core (10) over their entire surfaces, and the individual segments detached from the composite strip (51) are smart cards.

5. Method according to claim 1, wherein the cover sheets (18,19) are laminated to said core (10) only along one edge thereof, and the individual segments detached from the composite strip (51a) are pouches.

6. Method according to claim 1, wherein the foundation layer (12), the base layer (11), the intermediate layers (16,17), the core (10), the cover sheets (18,19) and the composite strip (51,51a) are in the form of continuous reels.

7. Method according to claim 3, wherein the intermediate layers (16,17) are in the form of separate, individual sheets.

8. Method according to claim 1, wherein the base layer (11) is provided as such in a previous manufacturing process.

9. Method according to claim 1, wherein graphic matter is applied to the intermediate layers (16,17).

10. Method according to claim 1, wherein the plastic material of which the intermediate layers (16,17) are made is a thermo-mechanically sensitive material.

11. Method according to claim 1, wherein the plastic material of which the cover sheets (18,19) are made is chosen from among polyethylene, silica-loaded polyolefins and polyesters.

12. Method according to claim 11, wherein the plastic material, of which the intermediate layers (16,17) are made, is chosen from the group of materials suitable for the cover sheets (18,19).

13. Method according to claim 1, wherein the foundation layer (12) is made of plastic matter chosen from among polyethylene, polyester and silica-loaded polyolefins.

14. Method according to claim 1, wherein the filling applied to the foundation layer (12) is of the same material as said foundation layer.

15. Method according to claim 1, wherein the personalizing matter is printed by laser printing.

16. Method according to claim 12, wherein the personalizing matter is printed by a laser printing process, which comprises only partially setting the toners by radiant heating, at least as to the cover sheets and to any layers made of a thermo-mechanically sensitive material.

17. Method according to claim 12, wherein the printing is carried out on continuous sheets by a laser printer.

18. Method according to claim 1, wherein the foundation layer is of polyester and the intermediate layers are of porous, silica-loaded polyolefin.

19. Method according to claim 1, wherein the electronic components (13,14) are connected to the foundation layer (12) by means of an adhesive previously applied to said foundation.

20. Method for making a contactless smart card, which comprises making a pouch by the method of claim 1, applying personalizing matter (21) to a surface chosen from among the rear face of at least one of the cover sheets (18,19), or at least one of the faces of the core (10), and laminating the core and cover sheets together.

21. Method according to claim 20, wherein the personalizing matter (21) is applied to the chosen surface or surfaces by carrying out the following steps:
a) providing a temporary substrate;
b) depositing on said temporary substrate colors whereby to print the desired personalizing matter;
c) provisionally setting said printed personalizing matter by the application of radiant heat without application of pressure;
d) juxtaposing said temporary substrate with its face carrying said personalizing matter in contact with said chosen surface;
e) transferring said personalizing matter from the said temporary substrate to said cover sheet, whereby said personalizing matter is applied to said chosen surface; and
f) removing said temporary substrate.

22. Method according to claim 1 for the production of personalized smart cards, wherein the two intermediate layers (16,17), as provided, carry the personalizing graphic matter and, optionally, non-personalizing matter.

23. A smart card structure, which comprises a foundation layer (12), electronic components (13, 14), a top and a bottom intermediate layer (16, 17) and a top and a bottom cover sheet (18, 19), **characterized in that** it comprises a filling (15) between the electronic components, wherein a base layer (11) is formed by said foundation layer (12) and said electronic components (13, 14) together with said filling (15), said base layer having a thickness corresponding to that of said electronic components; **in that** said intermediate layers are laminated to said base layer to form a core (10); and **in that** said top and bottom cover sheets (18, 19), the top sheet at least being transparent, are laminated respectively to said top and said bottom intermediate layer (16,17).

24. A smart card structure according to claim 23, which is a pouch wherein the top and bottom cover sheets (18, 19) are laminated to the top and bottom intermediate layers along one side (31, 32) and unattached along the other sides.

25. A smart card structure according to claim 24, wherein the cover sheets (18,19) are made of polyethylene or high density polyethylene.

26. A smart card structure according to claim 24, wherein the non personalizing graphic matter is preprinted at least on one face of said core (10).

27. A smart card, structure according to claim 24, wherein the base layer (11) comprises a foundation layer (12) onto which the electronic components (13,14) are placed and adhesively connected, and a filling which fills all the spaces between said electronic components to complete a base layer having the thickness dictated by the dimensions of said electronic components.

28. A smart card structure according to claim 27, wherein the foundation layer (12) is made of polyester and the intermediate layers are made of polyethylene or silica-loaded polyolefin.

29. A smart card structure according to claim 27 or 28, wherein the foundation layer (12) has a thickness of 0.1 to 0.7 µm, the base layer has a thickness comprised between 150 and 900 µm, the intermediate layers have a thickness of 150 to 500 µm, and the cover sheets have a thickness of 30 to 250 µm, the overall thickness of said core and said leaves, when laminated together, being from 0.760 to 1.5 mm.

30. A smart card structure according to claim 27, wherein the filling (15) is made of the same material as the foundations layer.

31. A smart card structure according to claim 23, which is a smart card wherein the top and bottom cover sheets (18, 19) are laminated to the top and bottom intermediate layer (16, 17) over their entire surface and in that personalizing matter (21) is visible through at least one of the cover sheets, said matter being carried by the surface of at least one of said intermediate layers, and on the rear face of at least one of the cover sheets.

32. A smart card structure according to claim 31, wherein the foundation layer (12) has a thickness of 0.1 to 0.7 µm, the base layer has a thickness between 150 and 900 µm, the intermediate layers have a thickness of 150 to 500 µm, and the cover sheets have a thickness of 30 to 250 µm, the overall thickness of said core and said leaves, when laminated together being from 0.760 to 1.5 mm.

33. Apparatus for the continuous manufacture of personalized smart cards, or pouches, which comprises;
a - means for storing and delivering: I - a foundation layer (12) carrying the electronic components (13,14) that are desired in the smart card; II- a filling (15); III - two intermediate layers (16,17) of plastic matter; and IV - two cover sheets (18,19) of plastic matter;
b - guide means for: I - guiding said filling into contact with said foundation layer carrying said electronic components, whereby to create a composite base layer (11); II - guiding said two intermediate layers into contact with said base layer; and III - guiding said two cover sheets of transparent plastic matter into contact with said core; said base layer having a thickness corresponding to that of said electronic components;
c - laminators for laminating: I - said filling (15) to said foundation layer (12); whereby to form a composite base layer (11)-II- said two intermediate layers to said base layer, whereby to form a core (10); and III
- said two cover sheets (18,19) to said core (10), whereby to produce a composite strip (51,51a);
d - means for applying traction at least to said composite sheet, to cause said foundation layer, intermediate layers and cover sheets to advance continuously; and
e - means for separating segments from said composite strip.

34. Apparatus according to claim 33, wherein the foundation layer (12), the filling (15), the two intermediate layers (16,17), and the two cover sheets (18,19) are in form of reels, and the means for storing and delivering them are rotatable supports of said reels.

35. Apparatus according to claim 33, wherein the guide means are guide rollers.

36. Apparatus according to claim 33, wherein the means for separating segments from said composite sheet are chosen from among cutters and punchers.

37. Apparatus according to claim 33, further comprising automatic controls for synchronizing all moving parts.

38. Apparatus according to claim 33, comprising means for feeding and guiding segmental sheets.

39. Apparatus according to claim 33, further comprising a common base structure and a synchronizing control for all moving parts.

## Patentansprüche

1. Verfahren zur Herstellung individualisierter, intelligenter Karten oder Taschen mit intelligenten Karten, bei welchem vorgesehen sind
Bereitstellung einer Grundschicht (12),
Aufbringen der elektronischen Bauelemente (13, 14), die in der intelligenten Karte gewünscht sind, auf die Schicht, Bereitstellung von zwei Zwischenschichten (16, 17) und zwei Abdeckfolien (18, 19) aus Kunststoffmaterial, und Verbinden der Schichten und Folien miteinander zur Ausbildung eines Verbundstreifens (51), sowie Entfernen einzelner Segmente von dem Verbundstreifen, **gekennzeichnet durch**:
I - Ausbildung eines Kerns (10) **durch** Aufbringen einer Füllung (15) auf die Grundschicht (12) zwischen den elektronischen Bauelementen (13, 14), um hierdurch eine Basisschicht (11) mit einer Dicke entsprechend den Abmessungen der elektronischen Bauelemente zu schaffen; Aufbringen der gewünschten, individualisierenden Graphiksubstanz (21) entweder auf die Zwischenschichten oder auf die Abdeckfolien; und Anordnen der Zwischenschichten (16, 17) neben der Basisschicht (11), und Verbinden mit dieser, **durch** Laminieren über die gesamten, nebeneinander liegenden Oberflächen der Zwischenschichten und der Basisschichten;
II - Anordnen der Abdeckfolien neben dem Kern;
III- nachfolgendes Laminieren der Abdeckfolien an den Kern zur Erzeugung eines Verbundstreifens (51, 51a); wobei zumindest eine der Abdeckfolien (18, 19) transparent ist.

2. Verfahren nach Anspruch 1, das kontinuierlich durchgeführt wird.

3. Verfahren nach Anspruch 1, das automatisch durchgeführt wird.

4. Verfahren nach Anspruch 1, bei welchem die Abdeckfolien (18, 19) an den Kern (10) über ihre gesamten Oberflächen laminiert werden, und die einzelnen Segmente, die von dem Verbundstreifen (51) entfernt werden, intelligente Karten sind.

5. Verfahren nach Anspruch 1, bei welchem die Abdeckfolien (18, 19) an den Kern (10) nur entlang eines Randes des Kerns laminiert werden, und die einzelnen Segmente, die von dem Verbundstreifen (51a) entfernt werden, Taschen sind.

6. Verfahren nach Anspruch 1, bei welchem die Grundschicht (12), die Basisschicht (11), die Zwischenschichten (16, 17), der Kern (10), die Abdeckfolien (18, 19) und der Verbundstreifen (51, 51a) in Form kontinuierlicher Rollen vorhanden sind.

7. Verfahren nach Anspruch 3, bei welchem die Zwischenschichten (16, 17) in Form getrennter, einzelner Folien vorhanden sind.

8. Verfahren nach Anspruch 1, bei welchem die Basisschicht (11) als solche in einem vorherigen Herstellungsvorgang zur Verfügung gestellt wird.

9. Verfahren nach Anspruch 1, bei welchem die Graphiksubstanz an den Zwischenschichten (16, 17) angebracht wird.

10. Verfahren nach Anspruch 1, bei welchem das Kunststoffmaterial, aus welchem die Zwischenschichten (16, 17) hergestellt werden, ein thermomechanisch empfindliches Material ist.

11. Verfahren nach Anspruch 1, bei welchem das Kunststoffmaterial, aus welchem die Abdeckfolien (18, 19) hergestellt werden, ausgewählt wird unter Polyethylen, mit Siliziumdioxid versetzten Polyolefinen, und Polyestern.

12. Verfahren nach Anspruch 11, bei welchem das Kunststoffmaterial, aus welchem die Zwischenschichten (16, 17) hergestellt werden, aus der Gruppe von Materialien ausgewählt wird, die für die Abdeckfolien (18, 19) geeignet sind.

13. Verfahren nach Anspruch 1, bei welchem die Grundschicht (12) aus Kunststoffmaterial hergestellt wird, das ausgewählt wird unter Polyethylen, Polyester, und mit Siliziumdioxid beschickten Polyolefinen.

14. Verfahren nach Anspruch 1, bei welchem die Füllung, die auf die Grundschicht (12) aufgebracht wird, aus demselben Material wie die Grundschicht besteht.

15. Verfahren nach Anspruch 1, bei welchem die individualisierende Substanz durch Laserdruck gedruckt wird.

16. Verfahren nach Anspruch 12, bei welchem die individualisierende Substanz durch einen Laserdruckvorgang gedruckt wird, der das nur teilweise Fixieren der Toner durch Strahlungswärme umfasst, zumindest in Bezug auf die Abdeckfolien und irgendwelche Schichten, die aus einem thermomechanisch empfindlichen Material hergestellt sind.

17. Verfahren nach Anspruch 12, bei welchem das Drucken auf kontinuierlichen Folien mit einem Laserdrucker durchgeführt wird.

18. Verfahren nach Anspruch 1, bei welchem die Grundschicht aus Polyester besteht, und die Zwischenschichten aus porösem, mit Siliziumdioxid versetztem Polyolefin bestehen.

19. Verfahren nach Anspruch 1, bei welchem die elektronischen Bauelemente (13, 14) mit der Grundschicht (12) mit Hilfe eines Klebers verbunden werden, der vorher auf den Grund aufgebracht wurde.

20. Verfahren zur Herstellung einer kontaktlosen, intelligenten Karte, welches die Herstellung einer Tasche mit dem Verfahren nach Anspruch 1 umfasst, das Aufbringen einer individualisierenden Substanz (21) auf eine Oberfläche, die ausgewählt ist unter der rückwärtigen Oberfläche zumindest einer der Abdeckfolien (18, 19) oder zumindest einer der Oberflächen des Kerns (10), und Zusammenlaminieren des Kerns und der Abdeckfolien.

21. Verfahren nach Anspruch 20, bei welchem die individualisierende Substanz (21) auf die gewählte Oberfläche oder Oberflächen mittels Durchführung der folgenden Schritte aufgebracht wird:
a) Bereitstellung eines temporären Substrats;
b) Ablagern von Farben auf dem temporären Substrat, um hierdurch die gewünschte, individualisierende Substanz zu drucken;
c) provisorisches Fixieren der gedruckten, individualisierenden Substanz durch das Einsetzen von Strahlungswärme ohne Einsatz von Druck;
d) Legen des temporären Substrats mit dessen Oberfläche, welche die individualisierende Substanz trägt, an die ausgewählte Oberfläche und in Berührung mit dieser;
e) Übertragen der individualisierenden Substanz von dem temporären Substrat auf die Abdeckfolie, wodurch die individualisierende Substanz auf die ausgewählte Oberfläche aufgebracht wird; und
f) Entfernen des temporären Substrats.

22. Verfahren nach Anspruch 1 zur Herstellung individualisierter, intelligenter Karten, bei welchem die beiden Zwischenschichten (16, 17) im bereitgestellten Zustand die individualisierende Graphiksubstanz und, wahlweise, eine nicht-individualisierende Substanz tragen.

23. Anordnung einer intelligenten Karte, die eine Grundschicht (12) aufweist, elektronische Bauelemente (13, 14), eine obere und eine untere Zwischenschicht (16, 17), und eine obere und eine untere Abdeckfolie (18, 19), **dadurch gekennzeichnet, dass** sie eine Füllung (15) zwischen den elektronischen Bauelementen aufweist; wobei eine Basisschicht (11) durch die Grundschicht (12) und die elektronischen Bauelemente (13, 14) zusammen mit der Füllung (15) gebildet wird, und die Basisschicht eine Dicke entsprechend jener der elektronischen Bauelemente aufweist; dass die Zwischenschichten an die Basisschicht zur Ausbildung eines Kerns (10) laminiert sind; und dass die obere und die untere Abdeckfolie (18, 19), wobei die obere Folie zumindest transparent ist, an die obere bzw. untere Zwischenschicht (16, 17) anlaminiert sind.

24. Anordnung einer intelligenten Karte nach Anspruch 23, die eine Tasche ist, bei welcher die obere und untere Abdeckfolie (18, 19) an die obere und untere Zwischenschicht entlang einer Seite (31, 32) laminiert sind, und entlang den anderen Seiten unbefestigt sind.

25. Anordnung einer intelligenten Karte nach Anspruch 24, bei welcher die Abdeckfolien (18, 19) aus Polyethylen oder aus Polyethylen hoher Dichte hergestellt sind.

26. Anordnung einer intelligenten Karte nach Anspruch 24, bei welcher die nicht-individualisierende Graphiksubstanz vorher auf zumindest eine Oberfläche des Kerns (10) gedruckt wird.

27. Anordnung einer intelligenten Karte nach Anspruch 24, bei welcher die Basisschicht (11) eine Grundschicht (12) aufweist, auf welcher die elektronischen Bauelemente (13, 14) angeordnet sind, und mit ihr durch einen Kleber verbunden sind, sowie eine Füllung aufweist, welche sämtliche Räume zwischen den elektronischen Bauelementen füllt, um eine Basisschicht fertigzustellen, welche jene Dicke aufweist, die durch die Abmessungen der elektronischen Bauelemente vorgegeben wird.

28. Anordnung einer intelligenten Karte nach Anspruch 27, bei welcher die Grundschicht (12) aus Polyester besteht, und die Zwischenschichten aus Polyethylen oder aus mit Siliziumdioxid versetztem Polyolefin bestehen.

29. Anordnung einer intelligenten Karte nach Anspruch 27 oder 28, bei welcher die Grundschicht (12) eine Dicke von 0,1 bis 0,7 µm aufweist, die Basisschicht eine Dicke aufweist, die zwischen 150 und 900 µm liegt, die Zwischenschichten eine Dicke von 150 bis 500 µm aufweisen, und die Abdeckfolien eine Dicke von 30 bis 250 µm aufweisen, wobei die Gesamtdicke des Kerns und der Schichten, wenn sie zusammenlaminiert sind, zwischen 0,670 und 1,5 mm liegt.

30. Anordnung einer intelligenten Karte nach Anspruch 27, bei welcher die Füllung (15) aus demselben Material besteht wie die Grundschicht.

31. Anordnung einer intelligenten Karte nach Anspruch 23, die eine intelligente Karte ist, bei welcher die obere und untere Abdeckfolie (18, 19) an die obere und untere Zwischenschicht (16, 17) über ihre gesamte Oberfläche anlaminiert sind, wobei die individualisierende Substanz (21) durch zumindest eine der Abdeckfolien sichtbar ist, und die Substanz durch die Oberfläche zumindest einer der Zwischenschichten getragen wird, und auf der rückwärtigen Oberfläche zumindest einer der Abdeckfolien.

32. Anordnung einer intelligenten Karte nach Anspruch 31, bei welcher die Grundschicht (12) eine Dicke von 0,1 bis 0,7 m aufweist, die Basisschicht eine Dicke zwischen 150 und 900 µm aufweist, die Zwischenschichten eine Dicke von 150 bis 500 µm aufweisen, und die Abdeckfolien eine Dicke von 30 bis 250 µm aufweisen, wobei die Gesamtdicke des Kerns und der Schichten, wenn sie zusammenlaminiert sind, zwischen 0,760 und 1,5 mm liegt.

33. Einrichtung zur kontinuierlichen Herstellung individualisierter, intelligenter Karten oder Taschen, welche aufweist:
a - eine Vorrichtung zum Speichern und Liefern von:
I - einer Grundschicht (12), welche die elektronischen Bauelemente (13, 14) trägt, die in der intelligenten Karte gewünscht sind;
II - einer Füllung (15) ;
III- zwei Zwischenschichten (16, 17) aus Kunststoffmaterial; und
IV - zwei Abdeckfolien (18, 19) aus Kunststoffmaterial;
b - eine Führungsvorrichtung zum:
I - Führen der Füllung in Berührung mit der Grundschicht, welche die elektronischen Bauelemente trägt, um hierdurch eine zusammengesetzte Basisschicht (11) zu erzeugen;
II - Führen der beiden Zwischenschichten in Berührung mit der Basisschicht; und
III- Führen der beiden Abdeckfolien aus transparentem Kunststoffmaterial in Berührung mit dem Kern; wobei die Basisschicht eine Dicke entsprechend jener der elektronischen Bauelemente aufweist;
c - Laminatvorrichtungen zum Laminieren:
I - der Füllung (15) an die Grundschicht (12); um hierdurch eine zusammengesetzte Basisschicht (11) auszubilden;
II - der beiden Zwischenschichten an die Basisschicht, um hierdurch einen Kern (10) auszubilden; und
III- der beiden Abdeckfolien (18, 19) an den Kern (10), um hierdurch einen Verbundstreifen (51, 51a) auszubilden;
d - eine Vorrichtung zum Aufbringen von Zug auf zumindest die Verbundschicht, um die Grundschicht, die Zwischenschichten und die Abdeckfolien zum kontinuierlichen Vorschub zu veranlassen; und
e - eine Vorrichtung zum Abtrennen von Segmenten von dem Verbundstreifen.

34. Einrichtung nach Anspruch 33, bei welcher die Grundschicht (12), die Füllung (15), die beiden Zwischenschichten (16, 17), und die beiden Abdeckfolien (18, 19) in Form von Rollen vorhanden sind, und die Vorrichtungen zu ihrer Speicherung und Lieferung drehbare Halterungen der Rollen sind.

35. Einrichtung nach Anspruch 33, bei welcher die Führungsvorrichtungen Führungsrollen sind.

36. Einrichtung nach Anspruch 33, bei welcher die Vorrichtungen zum Abtrennen von Segmenten von der Verbundfolie zwischen Schneidvorrichtungen und Stanzvorrichtungen ausgewählt werden.

37. Einrichtung nach Anspruch 33, welche weiterhin automatische Steuerungen zum Synchronisieren sämtlicher beweglicher Teile aufweist.

38. Einrichtung nach Anspruch 33, welche eine Vorrichtung zum Zuführen und Führen von Schichtsegmenten aufweist.

39. Einrichtung nach Anspruch 33, welche weiterhin eine gemeinsame Basisanordnung und eine Synchronisiersteuerung für alle beweglichen Teile aufweist.

## Revendications

1. Procédé pour la fabrication de cartes à puce ou d'étuis pour carte à puce personnalisés, qui consiste à :
- fournir une couche de fondation (12) ;
- appliquer à ladite couche les composants électroniques (13, 14) qui sont souhaités dans la carte à puce ;
- fournir deux couches intermédiaires (16, 17) et deux feuilles de protection (18, 19) de matière plastique ; et
- relier lesdites couches et lesdites feuilles ensemble afin de former une bande composite (51) ; et
- détacher des segments individuels de ladite bande composite ;
**caractérisé :**
**par** les étapes consistant à :
I- former une âme (10) en appliquant une charge (15) à la couche de fondation (12) entre lesdits composants électroniques (13, 14), pour créer ainsi une couche de base (11) ayant une épaisseur correspondant aux dimensions des composants électroniques ; appliquer la composition graphique de personnalisation souhaitée (21) soit auxdites couches intermédiaires, soit auxdites feuilles de protection ; et juxtaposer lesdites couches intermédiaires (16, 17) à ladite couche de base (11) et les relier à celle-ci par stratification sur les surfaces juxtaposées entières desdites couches intermédiaires et de ladite couche de base ;
II- juxtaposer lesdites feuilles de protection par rapport à ladite âme;
III- ultérieurement, stratifier lesdites feuilles de protection sur ladite âme pour produire une bande composite (51, 51a) ; et
en ce qu'au moins une desdites feuilles de protection (18, 19) est transparente.

2. Procédé selon la revendication 1, réalisé en continu.

3. Procédé selon la revendication 1, réalisé automatiquement.

4. Procédé selon la revendication 1, dans lequel les feuilles de protection (18, 19) sont stratifiées sur ladite âme (10) sur leurs surfaces entières, et les segments individuels détachés de la bande composite (51) sont des cartes à puce.

5. Procédé selon la revendication 1, dans lequel les feuilles de protection (18, 19) sont stratifiées sur ladite âme (10) seulement le long d'un de ses bords, et les segments individuels détachés de la bande composite (51a) sont des étuis.

6. Procédé selon la revendication 1, dans lequel la couche de fondation (12), la couche de base (11), les couches intermédiaires (16, 17), l'âme (10), les feuilles de protection (18, 19) et la bande composite (51, 51a) sont sous forme de bobines continues.

7. Procédé selon la revendication 3, dans lequel les couches intermédiaires (16, 17) sont sous forme de feuilles individuelles séparées.

8. Procédé selon la revendication 1, dans lequel la couche de base (11) est fournie telle quelle dans un procédé de fabrication antérieur.

9. Procédé selon la revendication 1, dans lequel la composition graphique est appliquée aux couches intermédiaires (16, 17).

10. Procédé selon la revendication 1, dans lequel la matière plastique, dont les couches intermédiaires (16, 17) sont faites, est une matière thermo-mécaniquement sensible.

11. Procédé selon la revendication 1, dans lequel la matière plastique, dont les feuilles de protection (18, 19) sont faites, est choisie parmi le polyéthylène, les polyoléfines chargées de silice et les polyesters.

12. Procédé selon la revendication 11, dans lequel la matière plastique, dont les couches intermédiaires (16, 17) sont faites, est choisie dans le groupe de matières appropriées pour les feuilles de protection (18, 19).

13. Procédé selon la revendication 1, dans lequel la couche de fondation (12) est faite de matière plastique choisie parmi le polyéthylène, le polyester et les polyoléfines chargées de silice.

14. Procédé selon la revendication 1, dans lequel la charge appliquée à la couche de fondation (12) est faite de la même matière que ladite couche de fondation.

15. Procédé selon la revendication 1, dans lequel la composition de personnalisation est imprimée par impression laser.

16. Procédé selon la revendication 12, dans lequel la composition de personnalisation est imprimée par un procédé d'impression laser, qui consiste à ne fixer que partiellement les toners par chauffage rayonnant, au moins en ce qui concerne les feuilles de protection et toutes couches faites d'une matière thermo-mécaniquement sensible.

17. Procédé selon la revendication 12, dans lequel l'impression est réalisée sur des feuilles en continu par une imprimante laser.

18. Procédé selon la revendication 1, dans lequel la couche de fondation est faite de polyester et les couches intermédiaires sont faites de polyoléfine poreuse chargée de silice.

19. Procédé selon la revendication 1, dans lequel les composants électroniques (13, 14) sont reliés à la couche de fondation (12) au moyen d'un adhésif précédemment appliqué à ladite couche de fondation.

20. Procédé pour fabriquer une carte à puce sans contact, qui consiste à fabriquer un étui à l'aide du procédé de la revendication 1, appliquer une composition de personnalisation (21) à une surface choisie parmi le verso d'au moins une des feuilles de protection (18, 19), ou au moins une des faces de l'âme (10), et stratifier ensemble l'âme et les feuilles de protection.

21. Procédé selon la revendication 20, dans lequel la composition de personnalisation (21) est appliquée à la ou aux surfaces choisies en réalisant les étapes suivantes consistant à :
a) fournir un substrat temporaire ;
b) déposer sur ledit substrat temporaire des couleurs pour imprimer ainsi la composition de personnalisation souhaitée ;
c) fixer provisoirement ladite composition de personnalisation imprimée en chauffant par rayonnement sans appliquer de pression ;
d) juxtaposer ledit substrat temporaire, sa face portant ladite composition de personnalisation en contact avec ladite surface choisie ;
e) transférer ladite composition de personnalisation dudit substrat temporaire vers ladite feuille de protection, ainsi ladite composition de personnalisation est appliquée à ladite surface choisie ; et
f) retirer ledit substrat temporaire.

22. Procédé selon la revendication 1, pour la production de cartes à puce personnalisées, dans lequel les deux couches intermédiaires (16, 17), telles que fournies, portent la composition graphique de personnalisation et, éventuellement, une composition sans personnalisation.

23. Structure de carte à puce, qui comprend une couche de fondation (12), des composants électroniques (13, 14), des couches intermédiaires supérieures et inférieures (16, 17) et des feuilles de protection supérieures et inférieures (18, 19), **caractérisée en ce qu'**elle comprend une charge (15) entre les composants électroniques, dans laquelle une couche de base (11) est formée par ladite couche de fondation (12) et lesdits composants électroniques (13, 14) conjointement avec ladite charge (15), ladite couche de base ayant une épaisseur correspondant à celle desdits composants électroniques ; **en ce que** lesdites couches intermédiaires sont stratifiées sur ladite couche de base pour former une âme (10) ; et **en ce que** lesdites feuilles de protection supérieures et inférieures (18, 19), la feuille supérieure, au moins, étant transparente, sont stratifiées respectivement sur lesdites couches intermédiaires supérieures et inférieures (16, 17).

24. Structure de carte à puce selon la revendication 23, qui est un étui dans lequel les feuilles de protection supérieures et inférieures (18, 19) sont stratifiées sur les couches intermédiaires supérieures et inférieures le long d'un côté (31, 32) et ne sont pas attachées le long des autres côtés.

25. Structure de carte à puce selon la revendication 24, dans laquelle les feuilles de protection (18, 19) sont faites de polyéthylène ou de polyéthyléne haute densité.

26. Structure de carte à puce selon la revendication 24, dans laquelle la composition graphique sans personnalisation est préimprimée sur au moins une face de ladite âme (10).

27. Structure de carte à puce selon la revendication 24, dans laquelle la couche de base (11) comprend une couche de fondation (12) sur laquelle les composants électroniques (13, 14) sont placés et reliés par adhérence, et une charge qui remplie tous les espaces entre lesdits composants électroniques afin d'achever une couche de base ayant l'épaisseur dictée par les dimensions desdits composants électroniques.

28. Structure de carte à puce selon la revendication 27, dans laquelle la couche de fondation (12) est faite de polyester et les couches intermédiaires sont faites de polyéthylène ou de polyoléfine chargée de silice.

29. Structure de carte à puce selon la revendication 27 ou 28, dans laquelle la couche de fondation (12) possède une épaisseur comprise entre 0,1 et 0,7 µm, la couche de base possède une épaisseur comprise entre 150 et 900 µm, les couches intermédiaires possèdent une épaisseur comprise entre 150 et 500 µm, et les feuilles de protection possèdent une épaisseur comprise entre 30 et 250 µm, l'épaisseur totale de ladite âme et desdites feuilles, quand elles sont stratifiées ensemble, étant comprise entre 0,760 et 1,5 mm.

30. Structure de carte à puce selon la revendication 27, dans laquelle la charge (15) est faite de la même matière que la couche de fondation.

31. Structure de carte à puce selon la revendication 23, qui est une carte à puce dans laquelle les feuilles de protection supérieures et inférieures (18, 19) sont stratifiées sur les couches intermédiaires supérieures et inférieures (16, 17) sur leur surface entière et en ce que la composition de personnalisation (21) est visible à travers au moins une des feuilles de protection, ladite composition étant portée par la surface d'au moins une desdites couches intermédiaires, et au verso d'au moins une des feuilles de protection.

32. Structure de carte à puce selon la revendication 31, dans laquelle la couche de fondation (12) possède une épaisseur comprise entre 0,1 et 0,7 µm, la couche de base possède une épaisseur comprise entre 150 et 900 µm, les couches intermédiaires possèdent une épaisseur comprise entre 150 et 500 µm, et les feuilles de protection possèdent une épaisseur comprise entre 30 et 250 µm, l'épaisseur totale de ladite âme et desdites feuilles, quand elles sont stratifiées ensemble, étant comprise entre 0,760 et 1,5 mm.

33. Appareil pour la fabrication en continu de cartes à puce personnalisées, ou d'étuis, qui comprend :
a des moyens pour stocker et délivrer : I- une couche de fondation (12) portant les composants électroniques (13, 14) qui sont souhaités dans la carte à puce ; II- une charge (15) ; III- deux couches intermédiaires (16, 17) de matière plastique ; et IV- deux feuilles de protection (18, 19) de matière plastique ;
b des moyens de guidage pour : I- guider ladite charge en contact avec ladite couche de fondation portant lesdits composants électroniques, pour créer ainsi une couche de base composite (11) ; II- guider lesdites deux couches intermédiaires en contact avec ladite couche de base ; et III- guider lesdites deux feuilles de protection de matière plastique transparente en contact avec ladite âme ; ladite couche de base ayant une épaisseur correspondant à celle desdits composants électroniques ;
c des postes de stratification pour stratifier : I-ladite charge (15) sur ladite couche de fondation (12) ; afin de former ainsi une couche de base composite (11) ; II- lesdites deux couches intermédiaires sur ladite couche de base, afin de former ainsi une âme (10) ; et III- lesdites deux feuilles de protection (18, 19) sur ladite âme (10), afin de produire ainsi une bande composite (51, 51a) ;
d des moyens pour appliquer une traction au moins sur ladite feuille composite, afin de faire avancer en continu ladite couche de fondation, les couches intermédiaires et les feuilles de protection ; et
e des moyens pour séparer des segments de ladite bande composite.

34. Appareil selon la revendication 33, dans lequel la couche de fondation (12), la charge (15), les deux couches intermédiaires (16, 17), ainsi que les deux couches de protection (18, 19) sont sous forme de bobines, et les moyens pour les stocker et les délivrer sont les supports rotatifs desdites bobines.

35. Appareil selon la revendication 33, dans lequel les moyens de guidage sont des rouleaux de guidage.

36. Appareil selon la revendication 33, dans lequel les moyens pour séparer les segments de ladite feuille composite sont choisis parmi les couteaux et les emporte-pièce.

37. Appareil selon la revendication 33, comprenant de plus des commandes automatiques pour synchroniser toutes les parties mobiles.

38. Appareil selon la revendication 33, comprenant des moyens pour alimenter et guider les feuilles segmentaires.

39. Appareil selon la revendication 33, comprenant de plus une structure de base commune et une commande de synchronisation pour toutes les parties mobiles.
